# FASCICULE DE BREVET EUROPEEN

(11) **EP 0 680 124 B1**
(45) Date de publication et mention de la délivrance du brevet: **02.12.1998**
(21) Numéro de dépôt: 95410027.7
(22) Date de dépôt: 05.04.1995
(51) Int. Cl.: H02G 3/08, F16B 35/06

(54) **Cheville de fixation murale et écrou associé**
Dübel zur Wandbefestigung und zusammenwerkende Mutter
Dowell for fixation to a wall and associated nut

(30) Priorité: 25.04.1994 FR 9405194
(43) Date de publication de la demande: 02.11.1995
(73) Titulaire: SCHNEIDER ELECTRIC SA, 92100 Boulogne Billancourt (FR)
(72) Inventeur: Meyer, Jean-Claude, F-38050 Grenoble Cedex 09 (FR); Zinsius, Laurent, F-38050 Grenoble Cedex 09 (FR)
(74) Mandataire: Hecké, Gérard

(56) Documents cités:
- CA-A- 1 169 684
- DE-B- 1 115 332
- FR-A- 2 372 005
- US-A- 5 044 849

## Description

La présente invention concerne une cheville de fixation murale comportant un corps de cheville à ailettes et une tige d'expansion adaptée pour être engagée dans ledit corps pour provoquer l'expansion et son blocage en position dans un orifice approprié pratiqué dans une paroi murale.

Ce type de chevilles est utilisé couramment pour toutes sortes d'applications, telles que la fixation de plaques de matériaux isolants, la fixation de colliers de serrage pour le montage de câbles électriques ou de tubes de guidage pour de tels câbles. Pour la fixation de boîtiers d'appareillage électrique ou de boîtiers de dérivation. on utilise habituellement des chevilles classiques et des vis à tête large destinées à prendre appui contre le fond des boîtiers ou des boîtes pour les plaquer contre les parois et les maintenir fermement dans la position souhaitée. Cette liaison présente l'inconvénient de ne pas garantir une étanchéité absolue et d'être relativement fastidieuse à mettre en place.

Le document DE-B-1115332 se rapporte à un dispositif de fixation murale d'un boite de dérivation en matériau isolant. dans lequel la mise en place de la boîte s'effectue soit par glissement d'une tête de vis dans une rainure en queue d'aronde, soit au moyen d'une vis enrobée dans le fond de la boîte, soit par rotation de la boîte sur la partie filetée d'une vis. Un tel mode de fixation ne permet pas un montage rapide de la boîte.

La présente invention se propose de pallier ces inconvénients en réalisant une cheville de fixation murale telle que définie en préambule et qui permet une fixation rapide et étanche de boîtes de dérivation ou de boîtiers, notamment pour de l'appareillage électrique.

Ce but est atteint par la cheville selon l'invention, caractérisée en ce que: ladite tige d'expansion comporte des moyens de fixation d'un boîtier, notamment pour un appareillage électrique. lesdits moyens de fixation comprenant un embout fileté, et un organe de blocage amovible agencé pour être monté sur ledit embout pour bloquer le boîtier en position. ledit organe de blocage comportant un capuchon étanche.

Diverses formes de réalisation sont envisageables, notamment un accouplement à écrou ou du type à baïonnette.

La présente invention sera mieux comprise en référence à la description d'un mode de réalisation préféré donné à titre d'exemple non limitatif et aux dessins annexés dans lesquels :
la figure 1 représente une vue en perspective d'une forme de réalisation préférée d'une cheville selon l'invention telle qu'elle se présente avant son utilisation,
la figure 2 représente la cheville de la figure 1 dans la phase initiale de son utilisation,
la figure 3 représente une vue en perspective illustrant le mode de fixation d'un boîtier pour un appareillage électrique ou d'une boîte de dérivation,
la figure 4 représente une vue partielle en coupe qui représente plus en détail le montage des composants qui coopèrent pour la fixation du boîtier représenté par la figure 3,
la figure 5 représente une vue en perspective illustrant une première variante de réalisation de la cheville selon l'invention, et
la figure 6 représente une vue en perspective illustrant une deuxième variante de réalisation de la cheville selon l'invention.

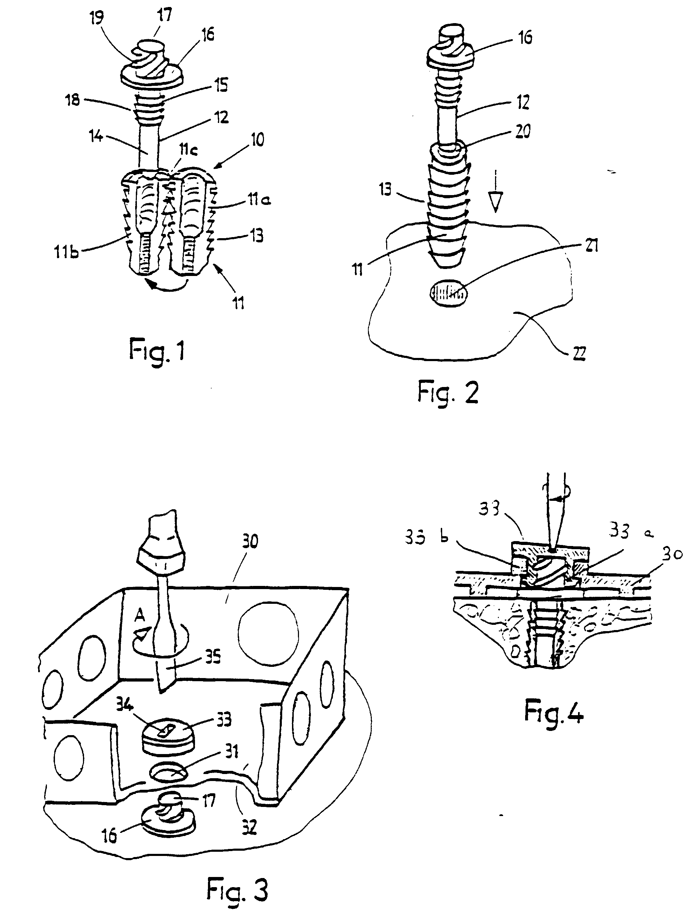

En référence à la figure 1, la cheville 10 représentée comporte principalement un corps 11 et une tige d'expansion 12 destinée à être engagée dans ce corps. Pour des raisons de facilité de fabrication par moulage, le corps 11 est de préférence, mais non exclusivement, constitué de deux demi-coquilles 11a et 11b liées entre elles par un résidu de moulage 11c qui forme une articulation et qui permet de ramener les deux demi-coquilles l'une en regard de l'autre pour former un corps ayant une forme générale sensiblement cylindrique et qui est pourvu à sa périphérie d'ailettes 13 qui ont une forme sensiblement circulaire comme le montre plus particulièrement la figure 2.

La tige d'expansion a la forme générale d'un clou, pointu à son extrémité pour permettre son introduction à l'intérieur du corps 11 de la cheville. La tige se compose d'un secteur 14 sensiblement cylindrique ayant une paroi lisse, surmonté d'un secteur 15 de section élargie par rapport à celle du secteur 14, d'un disque d'appui 16 et d'un embout 17 qui définit son extrémité supérieure. Le secteur 15 peut être pourvu d'ailettes périphériques 18 ou avoir une forme légèrement tronconique. Le disque d'appui 16 a un diamètre nettement supérieur au diamètre des autres secteurs de la tige. L'embout 17 est dans ce cas fileté et en particulier pourvu d'un filetage 19 du type à pas rapide.

La cheville préassemblée, c'est-à-dire avec un corps tel qu'il est réalisé après juxtaposition des deux demi-coquilles 11a et 11b et avec une tige d'expansion engagée dans une ouverture centrale ménagée à l'intérieur dudit corps 11, est engagée dans un trou borgne 21 réalisé dans une paroi murale 22, un plafond ou tout autre support adéquat. Le trou 21 a généralement un diamètre sensiblement égal à celui du corps 11 de telle manière que ce corps puisse être engagé relativement facilement à l'intérieur de ce trou. L'expansion de la cheville et son blocage en position dans l'orifice sont obtenus lorsque la tige d'expansion est complètement enfoncée dans l'ouverture 20 du corps de la cheville. La tige d'expansion est enfoncée dans le corps de la cheville jusqu'à ce que le disque d'appui 16 soit en contact avec la surface de la paroi 22 dans laquelle a été ménagée l'ouverture 21.

Lorsque cette cheville est en place, seul le disque d'appui 16 et l'embout 17 dépassent de la paroi et constituent un ancrage solide sur lequel il est possible de mettre en place un boîtier. La figure 3 représente une telle mise en place sous la forme d'une vue éclatée. Un boîtier 30 pourvu d'une ouverture 31 ménagée dans son fond 32 est mise en place sur l'embout 17 et sur le disque d'appui 16 de telle manière que ledit embout 17 traverse l'ouverture 31. Un écrou 33, qui se présente dans ce cas sous la forme d'un capuchon étanche, est adapté sur la partie de l'embout 17 qui s'étend vers l'intérieur du boîtier 30. Cet écrou en forme de capuchon porte à sa surface supérieure une entaille 34 qui est agencée pour recevoir l'extrémité d'un tournevis 35. Une rotation de ce tournevis d'un quart de tour dans le sens de la flèche A permet de rendre solidaire le boîtier 30 de l'embout 17 par blocage de l'écrou 33 en forme de capuchon. Etant donné que le fond 32 du boîtier 30 est en appui sur le disque d'appui 16 et que l'embout 17, et par conséquent le bord de l'ouverture 31, sont entièrement masqués par l'écrou 33 dont la paroi périphérique 30 appuie sur la surface intérieure du fond 32 du boîtier 30, la liaison entre la cheville et le boîtier est rendue totalement étanche.

L'embout 17 et l'écrou 33 définissent des moyens de fixation du boîtier 30 sur la cheville préalablement bloquée en position dans une ouverture ménagée dans une paroi murale. L'embout de la tige d'expansion constitue un élément mâle sur lequel s'adapte un organe de blocage amovible femelle, les deux éléments étant agencés pour coopérer dans le but de fixer en position par exemple le fond d'un boîtier pour un appareillage électrique. Il est évident que cet accouplement réalisé dans l'exemple représenté sous la forme d'un filetage à pas rapide peut être modifié et remplacé le cas échéant par un système du type à baïonnette ou similaire.

Dans la figure 4, on remarque que l'écrou 33 est équipé d'une embase d'encliquetage 33a destinée à être clipsée sur un rebord 33b annulaire entourant coaxialement l'ouverture 31. L'écrou 33 se trouve alors prémonté sur le fond du boîtier 30, et joue également le rôle de capuchon étanche lorsque le boîtier n'est pas encore fixé au mur. Un tel prémontage de l'écrou 33 facilite l'installation du boîtier 30 sur le mur ou cloison.

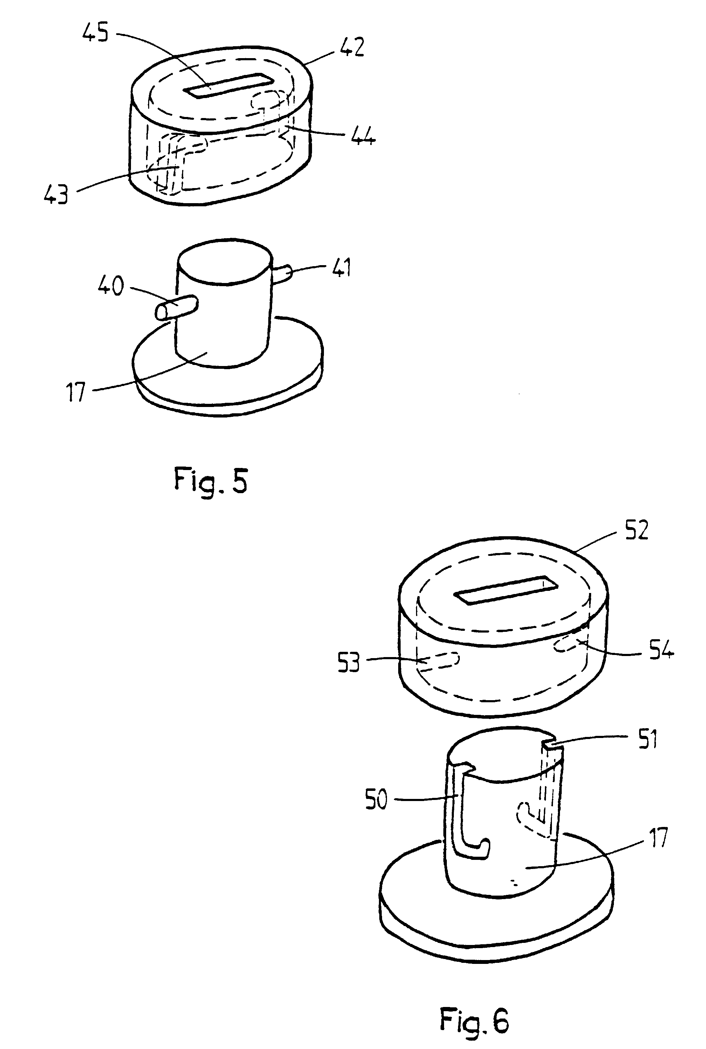

Deux variantes de réalisation sont représentées par les figures 5 et 6. Dans l'exemple montré par la figure 5, l'embout 17 est pourvu de deux tétons latéraux 40, 41. Un organe de blocage 42, pourvu d'une ouverture centrale dans laquelle est emboîté l'embout 17, comporte deux gorges 43 et 44, en forme de L, destinées à recevoir respectivement les deux tétons 40 et 41. La mise en place de l'organe de blocage sur les tétons s'effectue en deux phases : une première phase dans laquelle le déplacement relatif est une translation de telle manière que les deux tétons 40 et 41 puissent s'engager selon une direction axiale dans les gorges 43 et 44 et une deuxième phase au cours de laquelle le mouvement relatif est une rotation de telle manière que les deux tétons 40 et 41 puissent s'engager au fond des deux branches latérales des gorges respectives 43 et 44. A cet effet, l'organe de blocage 42 se présente sous la forme d'un capuchon dont la partie supérieure est pourvue d'une encoche 45 permettant la prise avec l'extrémité d'un tournevis au moyen duquel l'opérateur fait tourner cet organe de blocage.

La figure 6 représente une forme de réalisation dans laquelle l'embout 17 est pourvu de deux gorges 50 et 51 en forme de L et l'organe de blocage 52, toujours en forme de capuchon pour permettre s'assurer l'étanchéité de la liaison, comporte sur la face intérieure de l'ouverture dans laquelle est engagé l'embout 17 deux tétons latéraux 53 et 54 destinés à pénétrer dans les gorges 50 et 51. Dans ces deux variantes de réalisation, le principe de fonctionnement est sensiblement celui d'un système d'accouplement à baïonnette. Pour augmenter la sécurité de cet accouplement, les gorges peuvent avoir un profil approprié, par exemple sous la forme d'un étranglement ménagé sur la branche latérale, de telle manière que l'on obtienne un blocage anti-recul des tétons engagés dans ces gorges.

## Revendications

1. Cheville de fixation murale comportant un corps (11) de cheville à ailettes (13) et une tige d'expansion (12) adaptée pour être engagée dans ledit corps pour provoquer l'expansion et son blocage en position dans un orifice approprié pratiqué dans une paroi murale,
caractérisée en ce que ladite tige d'expansion (12) comporte des moyens de fixation d'un boîtier, notamment pour un appareillage électrique, lesdits moyens de fixation comprenant un embout (17) fileté, et un organe de blocage amovible agencé pour être monté sur ledit embout pour bloquer le boîtier en position, et que ledit organe de blocage comporte un capuchon étanche.

2. Cheville selon la revendication 1, caractérisée en ce que ledit organe de blocage amovible est un écrou (33) adapté pour être vissé sur l'embout, lequel possède un filetage du type à grand pas pour permettre une fixation rapide de l'écrou.

3. Cheville selon la revendication 1, caractérisée en ce que ledit embout (17) porte deux tétons latéraux (40, 41) et en ce que ledit organe de blocage amovible (42) est pourvu de deux gorges (43, 44) en "L" agencées de telle manière que les deux tétons puissent être engagés dans lesdites gorges pour former un accouplement du type à baïonnette.

4. Cheville selon la revendication 1. caractérisée en ce que ledit organe de blocage amovible (52) est pourvu de deux tétons latéraux (53, 54) et en ce que ledit embout (17) comporte deux gorges (50, 51) en "L" agencées de telle manière que les deux tétons puissent être engagés dans lesdites gorges pour former un accouplement du type à baïonnette.

5. Cheville selon la revendication 1, caractérisée en ce que ledit embout (17) de la tige d'expansion (12) est délimité par un disque d'appui (16) solidaire de ladite tige d'expansion, et dont le diamètre est sensiblement supérieur à celui de ladite tige.

6. Cheville selon la revendication 2, caractérisée en ce que le capuchon est solidaire de l'écrou (33) et comporte au moins une entaille agencée pour permettre une prise avec un tournevis.

7. Cheville selon la revendication ou 6, caractérisée en ce que l'écrou (33) est équipé de moyens d'encliquetage (33a) destinés à être clipsés sur un rebord (33b) annulaire du boîtier (30) pour constituer un capuchon étanche.

## Patentansprüche

1. Wandbefestigungsdübel mit einem, mit Zähnen (13) versehenen Dübelkörper (11) sowie einem Spreizbolzen (12), der dazu dient, in den genannten Körper eingeführt zu werden, um die Spreizung sowie die Feststellung in seiner Lage in einer, in einer Mauerwand ausgebildeten geeigneten Bohrung zu bewirken,
dadurch gekennzeichnet, daß der genannte Spreizbolzen (12) Mittel zur Befestigung eines, insbesondere zur Aufnahme eines elektrischen Schaltgeräts dienenden Gehäuses aufweist, wobei die genannten Befestigungsmittel einen Gewindezapfen (17) sowie ein abnehmbares Feststellelement umfassen, das dazu ausgelegt ist, auf dem genannten Zapfen montiert zu werden, um das Gehäuse in seiner Lage festzustellen, und daß das genannte Feststellelement eine dichte Kappe umfaßt.

2. Dübel nach Anspruch 1, dadurch gekennzeichnet, daß das genannte abnehmbare Feststellelement als Mutter (33) ausgebildet ist, die dazu ausgelegt ist, auf den Zapfen aufgeschraubt zu werden, der ein Schnellbaugewinde zu schnellen Befestigung der Mutter aufweist.

3. Dübel nach Anspruch 1, dadurch gekennzeichnet, daß der genannte Zapfen (17) zwei seitliche Nasen (40, 41) und das genannte abnehmbare Feststellelement (42) zwei L-förmige Nuten (43, 44) aufweist, die so ausgelegt sind, daß die beiden Nasen in die beiden genannten Nuten eingeführt werden können, um einen Bajonettverschluß zu bilden.

4. Dübel nach Anspruch 1, dadurch gekennzeichnet, daß das genannte abnehmbare Feststellelement (52) zwei seitliche Nasen (53, 54) und der genannte Zapfen (17) zwei L-förmige Nuten (50, 51) aufweist, die so ausgelegt sind, daß die beiden Nasen in die beiden genannten Nuten eingeführt werden können, um einen Bajonettverschluß zu bilden.

5. Dübel nach Anspruch 1, dadurch gekennzeichnet, daß der genannte Zapfen (17) des Spreizbolzens (12) durch einen, fest mit dem genannten Bolzen verbundenen Stützkragen (16) begrenzt wird, der einen wesentlich größeren Durchmesser aufweist als der genannte Bolzen.

6. Dübel nach Anspruch 2, dadurch gekennzeichnet, daß die Kappe fest mit der Mutter (33) verbunden ist und mindestens einen Schlitz aufweist, um das Eingreifen eines Schraubendrehers zu ermöglichen.

7. Dübel nach Anspruch 2 oder 6, dadurch gekennzeichnet, daß die Mutter (33) Schnappmittel (33a) aufweist, die dazu dienen, auf einen ringförmigen Vorsprung (33b) des Gehäuses (30) aufgeschnappt zu werden, um eine dichte Kappe zu bilden.

## Claims

1. A plug for wall fixing comprising a plug body (11) with ribs (13) and an expansion rod (12) designed to be engaged in said body to cause expansion and locking thereof in position in an appropriate hole made in a wall,
characterized in that said expansion rod (12) comprises means for fixing a case, in particular for electrical switchgear, said means for fixing comprising a threaded end (17) and a removable locking part arranged to be fitted on said end to lock the case in position, and that said locking part comprises a tight cover.

2. The plug according to claim 1, characterized in that said removable locking part is a nut (33) designed to be screwed onto the end, which has a thread of the large pitch type to enable fast fixing of the nut.

3. The plug according to claim 1, characterized in that said end (17) bears two lateral pins (40, 41) and that said removable locking part (42) is provided with two L-shaped grooves (43, 44) arranged in such a way that the two pins can be engaged in said grooves to form a coupling of the bayonet type.

4. The plug according to claim 1, characterized in that said removable locking part (52) is provided with two lateral pins (53, 54) and that said end (17) comprises two L-shaped grooves (50, 51) arranged in such a way that the two pins can be engaged in said grooves to form a coupling of the bayonet type.

5. The plug according to claim 1, characterized in that said end (17) of the expansion rod (12) is bounded by a supporting disk (16) securedly affixed to said expansion rod, and whose diameter is appreciably larger than that of said rod.

6. The plug according to claim 2, characterized in that the cover is securedly affixed to the nut (33) and comprises at least one notch arranged to enable gripping with a screwdriver.

7. The plug according to claim 2 or 6, characterized in that the nut (33) is equipped with dipping means (33a) designed to be dipped onto an annular edge (33b) of the case (30) to form a tight cover.
